# EUROPEAN PATENT SPECIFICATION

(11) **EP 2 814 858 B1**
(45) Date of publication and mention of the grant of the patent: **06.04.2016**
(21) Application number: 13708365.5
(22) Date of filing: 14.02.2013
(51) Int. Cl.: C08F 299/00, C08F 230/08, C08F 299/08, C08G 77/46, C08L 43/04, G02B 1/04

(54) **POLYSILOXANE BASED BLOCK COPOLYMERS**
BLOCKCOPOLYMERE AUF POLYSILOXANBASIS
COPOLYMÈRES SÉQUENCÉS À BASE DE POLYSILOXANE

(30) Priority: 15.02.2012 US 201261599394 P
(43) Date of publication of application: 24.12.2014
(73) Proprietor: DSM IP Assets B.V., 6411 TE Heerlen (NL)
(72) Inventor: TIAN, Yuan, NL-6100 AA Echt (NL); CURTIN, Scott, NL-6100 AA Echt (NL); IYER, Ananth, NL-6100 AA Echt (NL); WANG,Anfeng, NL-6100 AA Echt (NL); OUYANG, Meng, NL-6100 AA Echt (NL)
(74) Representative: Hoogendam, Gerrie Christine
(86) International application number: PCT/EP2013/053027
(87) International publication number: WO 2013/120974

(56) References cited:
- WO-A1-2012/052527
- US-A- 5 451 617

## Description

The invention is directed to polysiloxane based block copolymers that can be used in ophthalmic lenses, for example copolymers acceptable for use in contact lenses.

To design and select materials for contact lenses, many factors must be considered to optimize the physical, chemical and biological properties. Examples of these properties include oxygen permeability, wettability, lubricity, biocompatibility, physical strength, modulus, and optical requirements, to name just a few.

While patient comfort has driven the market use of these lenses, the usefulness of these lenses depends on both the physical properties (including oxygen transport and lubricity of the lens) as well as the amount of protein and lipid deposition on the lenses during wear. In a silicone hydrogel contact lens oxygen permeability, which has been correlated to lens comfort and eye health, can be successfully accessed by using designed silicone compounds while lubricity can be achieved by of the incorporation of different hydrophilic components. Different technologies exist today to present a final lens that has the optical clarity and the desired lubricity, with controllable modulus and high oxygen permeability in the silicone hydrogel lenses.

Due to their high oxygen permeability, silicone based materials have been used extensively over the last 10 years in silicone hydrogel contact lens manufacturing. However, silicone is a hydrophobic material, and for this reason silicone contact lenses tend to develop a relatively hydrophobic, non-wettable surface in contact with a hydrophobic lens mold during the manufacturing. Compatibilizing of hydrophilic and hydrophobic components within silicone hydrogel formulations is critical for the manufacturing of optically clear wettable contact lenses. For instance, phase separation of hydrophobic silicone from hydrophilic components in the lens formulation may occur and also phase separation in the final lens saturated with aqueous media can occur. This has a negative effect on the optical clarity.

In addition lipid and protein have a high tendency to deposit on a hydrophobic surface and this will affect optical clarity as well. Likewise, adsorption of unwanted components from the ocular tear fluid on to the lens material during wear is one of the contributory factors for causing reduced comfort experienced by patients. In addition, bacterial infections can potentially occur if lens care regimens are not followed for use of the lenses. The extent of undesirable adsorptions on the lens will determine the lens care needs for a specific lens and will impact on the duration the ophthalmic lens can be present in the eye.

Various methods have been used to render the contact lens surface with sustained wettability and/or lubricity. Wettability and/or lubricity is a property that is critical to the wear comfort and cornea health. One of the common practices to increase the wettability is to add an internal wetting agent such as polyvinylpyrrolidone (PVP) or to alter the surface during plasma treatment, high energy irradiation and by applying a topical coating to obtain an extremely hydrophilic surface (See e.g., EP 713106A1, and EP 2089069A1). Plasma treatment can be effective for silicone hydrogel contact lenses, but it is costly and time consuming to use this approach. Topical coating can effectively alter the surface properties, but also introduces an additional step in manufacturing and is often complex in nature.

Others have tried to increase the surface wettability by adding hydrophilic monomers in the lens formulation. Ionic monomers such as acrylate or methacrylate with zwitterionic groups including sulfobetaine, carboxy betaine and carboxy betaine ester are highly hydrophilic. By the introduction of these groups it is possible to retain the tear film and to reduce lipid or protein deposition. However, these zwitterionic group-containing monomers are generally solid and dissolve extremely poorly in hydrophobic monomers, such as silicone monomers. These monomers will precipitate or phase separate from the monomer mixture and affect optical transparency.

Non-ionic hydrophilic monomers have been used to render a contact lens hydrophilic; examples of which include 2-hydroxyethyl methacrylate, N-vinyl pyrrolidone, and dimethylacrylamide. Other reactive monomers or prepolymers were also reported to provide internal wetting capability (see e.g., WO 2006039466). Careful balancing of these hydrophilic monomers with other components in the lens formulation is necessary, especially for silicone hydrogel lens formulations in order to balance oxygen permeability, wettability and other physical properties. Using these non-ionic hydrophilic monomers often has its limitation in optimizing the overall lens performance without sacrificing other properties one way or the other.

### BRIEF SUMMARY OF THE INVENTION

The present disclosure is directed to a block copolymer having the structure of formula (I) or (II) or (III) or (IV):

E₁-[X-Sil]_{z}-X-[Y-[X-Sil]ₙ]ₘ-X-E₂ (I)

E₁-[[Y-[X-Sil]_{n]m}-X-Y-E₂ (II)

E₁-[X-Y]_{z}-X-[Sil-[X-Y]ₙ]ₘ-X-E₂ (III)

E₁-Sil-[X-Y]_{z}-X-[Sil-[X--Y]ₙ]ₘ-X-Sil-E₂ (IV)

wherein
E1 and E2 are end groups containing at least one reactive double bond,
Y is a diol derived unit comprising at least one pendant oligomeric or polymeric group,
X is a unit derived from a diisocyanate ,
Sil is a siloxane oligomer or polymer unit,
and wherein
m is an integer ranging from 1 to 50,
n is an integer ranging from 1 to 50, and
z is an integer ranging from 1 to 50.

In the block copolymer according to the invention, the diisocyanate may be an aliphatic diisocyanate.

In the block copolymer according to the invention, the block copolymer has pendant oligomeric or polymeric groups which may be hydrophilic groups. Such hydrophilic groups preferably arepolyethylene oxide (PEO) groups.

The diol from which the diol-derived unit comprising a pendant oligomeric or polymeric groups (X) has been derived in the block copolymer according to the invention, may have a molecular weight varying over a wide range. Preferably, the diol has a Mw ranging from 300-5000 g/mol, as determined by Gel Permeation Chromatography using N,N-dimethyl formamide (DMF) as the solvent at 80°C and using polystyrene standards.

The siloxane unit Sil in the block copolymer according to the invention, preferably is a solixane unit which comprises or consist of a unit derived from polydimethylsiloxane diol.

An exemplary block copolymer may have the following structure:

E₁-[X-(Sil)]₂-X[[Y-[X -(Sil)]ₙ]ₘ-X -E₂

wherein at least one of E1 or E2 or both E1 and E2 are hydroxyethylmethacrylate (HEMA),
Y is a a diol derived unit comprising at least one pendant oligomeric or polymeric group wherein the pendent oligomeric or polymeric group is polyethylene glycol (PEG),
X is a unit derived from isophorone diisocyanate (IPDI),
Sil is a siloxane unit derived from a polydimethylsiloxane (PDMS) diol,
and wherein
m is an integer ranging from 1 to 50,
n is an integer ranging from 1 to 50, and
z is an integer ranging from 1 to 50.

The number average molecular weight of the total block copolymer according to the invention may range from 8,000 to 55,000 g/mol as determined by Gel Permeation Chromatography using N,N-dimethyl formamide (DMF) as the solvent at 80°C using polystyrene standards.

The block copolymers according to the invention comprise the same structural units, but depending on the order in which the different structural units are reacted with each other, the structure of the resulting block copolymer may also vary.

Thus, the present disclosure is also directed to a method for the production of a block copolymer comprising:
a. reacting a diisocyanate with a siloxane diol under dry air or nitrogen gas at elevated temperature in the presence of a catalyst to form an intermediate;
b. react said intermediate with one or more diols comprising a pendant oligomeric or polymeric group, under nitrogen with stirring in the presence of a catalyst to form a pre-polymer;
c. react said polymer with a compound having at least one reactive double bond in the presence of a catalyst.

This method is used for the production of block copolymers according formula (I) or (II).

The present methods may change the reaction sequence and order of addition. For instance a polymer within the scope of the present block copolymers may be formed by first reacting a PEG diol with a diisocyanate unit and chain extending the resultant prepolymer with a siloxane unit. This alters the end group composition and forms a polymer where PEG is adjacent to the end group as opposed to the siloxane unit being adjacent to the end group.

Thus, the invention also relates to the following method:
a method for the production of a block copolymer comprising:
   a. reacting a diisocyanate with one or more diols comprising at least one pendant oligomeric or polymeric group under nitrogen gas at elevated temperature in the presence of a catalyst to form an intermediate;
   b. reacting said intermediate with one or more polysiloxane diols, under under dry air or nitrogen with stirring in the presence of a catalyst to form a pre-polymer;
   c. reacting said polymer with a compound having at least one reactive double bond in the presence of a catalyst.

This method is suitable for the production of a block copolymer according to Formula (III) or (IV). In both methods according to the invention, the reaction in step b may also be referred to as chain extending. Chain extension is a concept well known in polymer chemistry.

In the methods according to the invention, the starting amounts of siloxane diol and the diol comprising at least one pendant oligomeric or polymeric group, may range from45-85% by weight of the total weight of polysiloxane diol and the diol comprising at least one pendant oligomeric or polymeric group in the composition and the amount of polyalkylene oxide may range from 15-55% by weight of the total weight of polysiloxane diol and the diol comprising at least one pendant oligomeric or polymeric group in the composition.

The present block copolymers may be included in an ophthalmic lens formulation, or more specifically, a contact lens formulation.

The block copolymers can be made into formulations for contact lenses further comprising a silicone monomer and a hydrophilic monomer.

The block copolymers according to the invention may be made into contact lenses, by preparing a composition comprising more than 10 wt% of a silicone hydrogel and the block copolymer according to the invention and subsequently formed into lenses, which may result in lenses having a lubricity contact angle of less than 90 degrees and a water break up time of more than 1 second.

### DETAILED DESCRIPTION OF THE INVENTION

Unless defined otherwise, all technical and scientific terms used herein have the same meaning as commonly understood by one of ordinary skill in the art to which this invention belongs. Generally, the nomenclature used herein are well known and commonly employed in the art. In some instances, recognized by those in the art, conventional methods are used for laboratory procedures. Where a term is provided in the singular, the inventors also contemplate the plural of that term the block copolymers according to the invention can be washed of by water. The block copolymers according to the invention may be used as polysiloxane crosslinkers in formulations to make contact lenses.
The block copolymers according to the invention have the structure of formula (I) or (II) or (III) or (IV):

E₁-[X-Sil]_{z}-X-[[Y-[X-Sil]ₙ]ₘ-X-E₂ (I)

E₁-[[Y-[X-Sil]ₙ]ₘ-X-Y-E₂ (II)

E₁-[X-Y]_{z}-X-[Sil-[X-Y]ₙ]ₘ-X-E₂ (III)

E₁-Sil-[X-Y]_{z}-X-[Sil-[X-Y]ₙ]ₘ-X-Sil-E₂ (IV)

wherein
E1 and E2 are endgroups containing at least one reactive double bond,
Y is a diol derived unit comprising at least one pendant oligomeric or polymeric group,
X is a unit derived from a diisocyanate ,
Sil is a siloxane oligomer or polymer unit,
wherein m is an integer ranging from 1 to 50,
n is an integer ranging from 1 to 50, and
z is an integer ranging from 1 to 50.
Preferably, m is an integer ranging from 1 to 10, and
preferably, n is an integer ranging from 1 to 10.

In the block copolymer according to the invention E1 and E2 are end groups containing at least one reactive double bond. End groups are functional groups that are located at the ends of the polymeric chain of the block copolymer according to the invention. The end groups E1 and E2 can be the same or different. The block copolymers according to the invention may be used as polysiloxane crosslinkers in contact lens formulations and therefore the block copolymers comprise reactive groups that can react with the other constituents of the contact lens formulation. According to the invention the end groups are reactive groups that contain at least one reactive double bond. The double bond can, for example, be formed by an acryl or methacryl group and is formed on the ends of the polymeric chain by reaction of an isocyanate group with, for example, hydroxy acrylate, methacrylate or acrylamide. Examples may include hydroxyl methyl methacrylate, hydroxyl ethyl acrylate, and hydroxy n-butyl acrylate. One exemplary end group forming compound is hydroxyethyl methacrylate (HEMA), shown below:

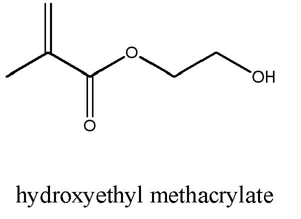

In the block copolymer, Y is a diol derived unit comprising at least one pendant oligomeric or polymeric group.

Y may be derived from a diol or is the reaction product of a diol and contains a pendant oligomeric or polymeric group. In the preparation of the block copolymer according to the invention, the hydroxyl groups of the diol are reacted with the isocyanate units in the block copolymer to form urethane bonds. Suitable diols for use in the reaction may include a wide variety of diols comprising at least one pendant oligomeric or polymeric group. The structure where the pendent group is attached to is typically referred to as "the backbone". The diols used to provide the unit derived from a diol comprising at least one pendent oliomeric or polymeric group may for example have a butane diol, polycarbonate diol, hexane diol, and propane diol back bone, and according to the invention, each backbone comprises at least one pendent oligomeric or polymeric group.

As known to one of skill in the art, a pendant group or a side group is generally a group of molecules arranged in linear or branched conformations and attached to the backbone polymer chain.

For the purpose of this invention, the pendant groups and their derivatives may be hydrophilic, and may generally include polyalkylene oxides, such as poly(ethylene glycol)(PEG), poly(propylene glycol), polyethylene oxide (PEO)and their monoalkyl-substituted derivatives.

For the purposes of the present invention, when Y is hydrophilic, the pendant oligomeric or polymeric groups are generally pendant oligomeric or polymeric oxyalkylene groups, such as poly(ethylene glycol) (PEG), poly(propylene glycol (PPG), and polyethylene oxide (PEO) comprising groups, copolymers thereof and their monoalkyl-substituted derivatives. The term "derived from" is intended to mean "made from" through single or multiple chemical reaction steps and the term "derivative" is intended to mean different examples or analogues of a general chemical composition. For instance the structure generally referred to as "PEG diol" is provided below. Examples of the "PEG diol" may include Ymer™ N120, supplied by Perstorp or Tegomer™ D 3404 supplied by Evonik, both commercial products comprise PEG(7)-2-ethylpropane1,3,diol.

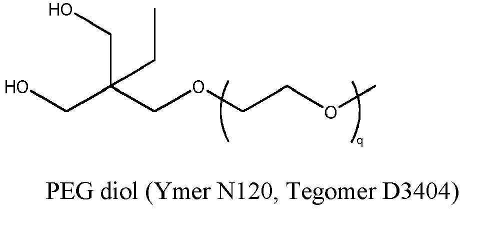

The pendant group in the diol Y in the block copolymer according to the invention preferably is a hydrophilic group. The pendant oligomeric or polymeric group is a group that does not comprise any chemical moieties that may react with the diisocyante used in the preparation of the block copolymers according to the invention under the reaction conditions applied in the synthesis of the block copolymers according to the invention. With "oligomeric or polymeric" it is ondicated that the pendant group comprises a unint that is repeated at least 2 times, but that may be repeated up to 75 times. For example, the pendant group may comprise the unit -(-C2H4-O-), from 2 up to and including 75 times. Other repeating units may also be present from 2 - 75 times.

More preferably, the pendant group in Y comprises a polyethylene oxide (PEO) oligomer or polymer. More preferably, the pendant groups consists of a polyethylene oxide (PEO) oligomer or polymer.

The terms "poly(ethlyene glycol)", "poly(oxyethylene)" and "polyethylene oxide" refer to the same chemical component and these terms can be used in the prior art and this description when referring to the same component. The diol from which the diol-derived unit comprising a pendant oligomeric or polymeric groups has been derived preferably has a Mw ranging from 300-5000 g/mol, as determined by Gel Permeation Chromatography using N,N-dimethyl formamide (DMF) as the solvent at 80°C using polystyrene standards.
In the block copolymer according to the invention X is a unit derived from a diisocyanate unit. The term "derived from" is intended to mean "made from" through single or multiple chemical reaction steps and the term "derivative" is intended to mean different examples or analogues of a general chemical composition. In the present instance, the uses of diisocyanate units and results of using diisocyanate units to obtain a urethane bond are generally well understood. The diisocyanate units can comprise aromatic or aliphatic diisocyanates. The diisocyanates may be selected from the group comprising alkyl diisocyanates, arylalkyl diisocyanates, cycloalkylalkyl diisocyanates, alkylaryl diisocyanates, cycloalkyl diisocyanates, aryl diisocyanates, cycloalkylaryl diisocyanates, and mixtures thereof.

Examples of diisocyanates are isophorone diisocyanate, hexane diisocyanate, 1,4-diisocyanatocyclohexane, lysine-diisocyanate, naphthalene diisocyanate, 4,4'-diphenylmethane diisocyanate, hexamethylene diisocyanate, 2,4-toluene diisocyanate, 2,6-toluene diisocyanate, hexamethylene-1,6-diisocyanate, tetramethylene-1,4-diisocyanate, naphthalene-1,5-diisocyanate, xylylene diisocyanate, dicyclohexylmethane-4,4-diisocyanate, 1,4-benzene diisocyanate, 3,3'-diethoxy-4,4-diphenyl diisocyanate, m-phenylene diisocyanate, polymethylene polyphenyl diisocyanate, 4-isocyanatocyclo-4' -isocyanate, and mixtures thereof. Preferred are aliphatic diisocyanate units; more preferred are isophorone diisocyanate, 1,4-diisocyanatocyclohexane and mixtures thereof. As an example, the structure of isophrone diisocyanate is shown below:

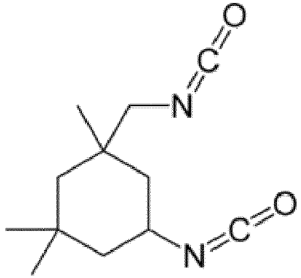

In the block copolymer according to the invention 'Sil' is a siloxane unit according to formula V,

-R₈-SiR₁R₂-O-[-SiR₃R₄-O-]ₚ-SiR₅R₆R₇-

wherein R₁, R₂, R₃, R₄, R₅, and R₆ may be the same or different and are selected from alkyl groups having 1 to 16 carbons or alkyloxy groups having 1 to 16 carbons, substituted and unsubstituted aromatic groups, and R₇ and R₈ are a bond or a divalent alkylene groups having 1 to 16 carbons or alkyleneoxy groups having 1 to 16 carbons and wherein p is an integer ranging from 1 - 25.

R₁, R₂ , R₃, R₄, R₅, and R₆ preferably are an alkyl group having from 1-4 carbons, most preferably they are methyl groups.

Siloxane units in the block copolymers according to the invention are preferably derived from polydimethylsiloxane (PDMS).
In the preparation of the block copolymer according to the invention the siloxane unit originates form a diol siloxane compound. Specific examples of silicon containing compounds that may be used to make a diol siloxane compound include heptamethyltrisiloxane, tris(trimethylsiloxy)silane, pentamethyldisiloxane and polydimethylsiloxane.

The number average molecular weight of the total block copolymer is ranging from 8,000 to 55,000 g/mol, preferably ranging from 15,000 to 30,000 g/mol and more preferably ranging from 17,000 to 27,000 g/mol as determined by Gel Permeation Chromatography using N,N-dimethyl formamide (DMF) as the solvent at 80°C and using polystyrene standards.

To obtain the present block copolymers, a diisocyanate unit (hereinafter "a diisocyanate") is reacted with a siloxane unit (preferably a polysiloxane diol) under nitrogen gas or dry air at elevated temperature. For instance, the maximum exothermic temperature is preferably less than 80 ° C to eliminate secondary reactions affecting the molecular weight and/or functionality of the resultant intermediate. More preferably the temperature is less than 75 ° C. The minimum temperature is generally 40 ° C, and the actual temperature is preferably about 55 ° C.

A catalyst is included in the diisocyanate-siloxane mixture. Exemplary catalysts include organometallic compounds based on mercury, lead, tin (dibutyltin dilaurate), bismuth (bismuth octanoate), and zinc or tertiary amines such as triethylenediamine (TEDA, also known as 1,4-diazabicyclo[2.2.2]octane or DABCO, an Air Products's trade mark), dimethylcyclohexylamine (DMCHA), and dimethylethanolamine (DMEA) or others known in the art may be added to the mixture. The amount of the catalyst may range from 0.01-0.04 wt %, preferably having 0.025 wt % based on the total weight of the reaction mixture. From this step, a diisocyanate-polysiloxane-diisocyanate intermediate is formed.

Next the diisocyanate-siloxane-diisocyanate mixture is reacted with one or more diols comprising at least one pendant oligomeric or polymeric group, which pendent group typically comprises or is an oligomeric or polymeric polyalkylene oxides, mixtures thereof, copolymers thereof and/or their monoalkyl-substituted derivatives (for ease of use below, referred to as "diol with pendant group"). The diol with pendant group may be neutralized to form a neutralized diol. The diol with pendant group polymerizes with the diisocyanate-siloxane-diisocyanate intermediate under stirring, followed by addition of a catalyst to form a pre-polymer. The maximum exothermic temperature is preferably less than 80 ° C. More preferably the temperature is less than 75 ° C. The minimum temperature is generally 40 ° C, and the actual temperature is preferably about 55 ° C.

The diisocyanate-siloxane-diol with pendent group prepolymer is sparged with dry air and reacted with and end-group forming compound, such as HEMA (hydroxyethyl methacrylate) and a catalyst. The temperature for this reaction is at least 20 ° C and preferably 35 ° C and the maximum temperature is less than 50 ° C to eliminate auto polymerization of the HEMA.

In the block copolymer the amount of siloxane unit may range from 45-85% by weight of the total weight of the siloxane unit and the "diol with pendent group" in the composition and the amount of "diol with pendent group" may range from 15-55% by weight of the total weight of siloxane unit and the "diol with pendent group" in the composition. More preferably the composition may include 75 ± 5 % by weight siloxane unit and 25 ± 5% by weight diol with pendent group. In another embodiment, the composition may include 50 ± 5% by weight siloxane and 50 ± 5 % by weight "diol with pendent group. Overall the present methods include a polyurethane synthesis that permits reactant ratios and order of addition to be modified to control composition and molecular weight. As is well known, urethane bonds are formed through (or derived from) a reaction of an -OH group and a icocynate groups During synthesis of polyurethanes, typically a diol is reacted with a diisocyanate, resulting in a polymer comprising multiple urethane bonds. By varying the ratio of the diol versus the diisocyanate, one can synthesize polyurethanes with either -OH groups at the two ends of the polyurethane polymer or isocyante groups at the two ends of the polyurethane polymer. For the block copolymer according to the invention the reaction is carried out with a diol comprising at least one oligomeric or polymeric group or a siloxane diol with the desired diisocyanate.

It will be understood now that the reaction sequence described above can be altered by first reacting the diol comprising at least one oligomeric or polymeric group with the diisocyante unit and chain extending the resultant prepolymer with the siloxane diol.. This alters the end group composition.. It is also possible to alter the component ratio so the remaining group is a hydroxyl group instead of an isocyanate group. This allows the formation of end groups using starting materials for the end grousp comprising an isocyanate group in addition to a reactive double bond. For example isocyanatoethyl methacrylate (IEM) can then be incorporated as E1 and/or E2.

The number and molecular weight of diols: The hydroxyl number of the diols is determined using ASTM D4274: Standard Test Methods for Testing Polyurethane Raw Materials: Determination of Hydroxyl Numbers of Polyols. Isocyanate content in the polymer and prepolymers was determined by titration using ASTM D2572: Standard Test Methods for Isocyanate Groups in Urethane Materials or Prepolymers.

Molecular weights of polymer: The molecular weights for all polymer samples are determined using guidelines set in ASTM D5296: Standard Test Method for Molecular Weight Averages and Molecular Weight Distribution of Polystyrene by High Performance Size-Exclusion Chromatography. Gel Permeation Chromatography (GPC) weight average molecular weight (Mw) and GPC number average molecular weight (Mn) in g/mol and the polydispersity index (PDI=Mw/Mn) of the block copolymers were determined using polystyrene standards and tetrahydrofuran (THF) as the solvent at 30°C. GPC weight average molecular weight (Mw) and GPC number average molecular weight (Mn) in g/mol and the polydispersity index (PDI=Mw/Mn) of the block copolymers were determined by Gel Permeation Chromatography (GPC) using polystyrene standards and N,N-dimethylformamide (DMF) as the solvent at 80 °C.

Although the block copolymers according to the invention comprise polysiloxane units, they glassware they were prepared in could be washed clean with water. Without being bound by any particular theory, it is believed that when the block co-polymers of the present invention are activated in the presence of an ultraviolet source and optionally in the presence of one or more other monomers or macromers, the block co-polymer of the present invention forms a crosslinking moiety. The inclusion of the block co-polymers as crosslinking moieties is believed to lead to the improved characteristics of water processability.

The term lens includes, but is not limited to ophthalmic lenses, soft contact lenses, hard contact lenses, intraocular lenses, overlay lenses, ocular inserts, optical inserts, spectacle lenses, goggles, surgical glasses and the like. In a preferred embodiment the lens is a contact lens and more preferably a soft contact lens. Soft contact lenses are made from hydrogels and silicone elastomers or hydrogels, which include but are not limited to silicone hydrogels. "Silicone hydrogel" refers to a silicone-containing polymeric material which can absorb at least 10 percent by weight of water when it is fully hydrated and is obtained by copolymerization of a polymerizable composition comprising at least one silicone-containing vinylic monomer or at least one silicone-containing macromer or at least one crosslinkable silicone-containing prepolymer.

A person skilled in the art may make silicone hydrogel contact lenses, e.g., by cast-molding in molds of a lens formulation comprising at least a silicone containing monomer or polymer, at least one hydrophilic monomer or macromer, and other necessary components. According to the invention, the hydrophilic component can be (in total or in part) the block co-polymer according to the invention. The contact lenses can be made with an ultraviolet or thermally curable formulation for use in a contact lens will frequently have a hydrophilic component which is approximately 30-80% by weight of the total weight of the composition. The hydrophilic components may be and typically are DMA (Dimethylacrylamide), HEMA, or NVP (N-vinyl Pyrrolidone). The silicone component may account for approximately 20-70% by weight of the total composition. When contact lenses are made using the present polymers, preferably the contact lens comprises at least 10 % silicone hydrogel and the present block copolymer. The silicone component may include TRIS (3-[tris(trimethylsilyloxy)silyl]-propyl methacrylate), SIGMA methyl bis(trimethylsiloxy)silyl propyl glycerol methacrylate and/or polydimethlysiloxanes.

### Ophthalmic Lens Compositions made using the present Block Copolymer

An ophthalmic lens may consist of the present block-copolymers. On the other hand, the present block copolymers may be incorporated into an ophthalmic lens as a crosslinker by reacting them with hydrophilic and silicone components that make up the lens formulation, e.g. by reacting the block copolymer according to the invention with DMA and TRIS or SIGMA to form a partially polymerized product. The partially polymerized product is then functionalized with one or more compounds having at least one reactive double bond. Preferably, lenses made with the present polysiloxane block copolymers include at least 10 % by weight silicone hydrogel.

### Water Processability

There is a strong trend in the chemical industry to reduce the amount of organic solvents used in any give process, and where possible to replace organic solvents by water as it reduces cost as well as organic solvent waste from both the manufacturing and/or clean-up associated with the post-manufacturing. This is also true for the lens industry. For the manufacture of contact lenses, the use of a water based process eliminates the step whereby the organic solvent is replaced by a water-based a contact lens solution, thus simplifying the production Residual organic solvent is eliminated as a potential problem in the final lens and eye safety. The present block copolymers assist in this goal by not needing organic solvents for clean-up or manufacturing.

Although various embodiments of the invention have been described using specific terms, devices, and methods, such description is for illustrative purposes only. The words used are words of description rather than of limitation. It is to be understood that changes and variations may be made by those skilled in the art without departing from the spirit or scope of the present invention, which is set forth in the following claims. In addition, it should be understood that aspects of the various embodiments and preferred ranges may be interchanged either in whole or in part and/or be combined in any manners. Therefore, the spirit and scope of the appended claims should not be limited to the description of the preferred versions contained therein.

### EXAMPLES

### Example 1: Synthesis of the present Block Copolymers

The block copolymers according to the invention can be prepared by the following methods.

### Raw Material Preparation:

Shin-etsu X22-160AS (an exemplary PDMS diol) is a polydimethylsiloxane diol wherein the diol groups are present at opposite ends of the molecule, and having a MW of about 1000 is potentially degassed under high vacuum (< 2 torr) at elevated temperature 70-80 °C and the collected PDSM diol is stored under Nitrogen blank. Isophorone Diisocyanate (IPDI) is distilled under high vacuum(< 2 torr) at 100-120 °C. The collected IPDI is stored under Nitrogen blank.

Perpstorp YMER™ N120 is a commercially available PEG formulation, for instance YMER™ N120 is an MPEG based diol, MW = 1090. YMER™ N120 (the PEG-diol) is optionally neutralized. To neutralize, 0.55 grams of 7.1% phosphoric acid solution in Tetrahydrofuran (THF) was added to 829 gram of YMER™ N120. It was then heated to 90 °C and sparged with dry nitrogen gas for 12 hours.

Evonik Tegomer™ D3404, Dibutyltin dilaurate (DBTDL), and Hydroxyethyl Methacryalte (HEMA) are used as received.

Bulk reactions are conducted with no solvent.

### Step 1: Reaction of IPDI (Isophorone Diisocyanate) with

### polydimethylsiloxane (PDMS) diol

The temperature controller is set to the required temperature of less than 80 °C, and preferably of around 55 ° C and heating is started. Hereinafter the temperature set on the outside controller is also sometimes referred to as "the outside temperature". Nitrogen gas was turned on. 58.24 grams of PDMS diol is charged into the reactor. Stirring is turned on. 58.2 grams of IPDI is added into the reactor under stirring, followed by addition of 0.07 grams dibutyltin dilaurate. The reaction is run for 2 hours at than 80 ° C as a maximum exothermic temperature and preferably at a set point of about 55 ° C.

### Step 2: Reaction of the reaction product of step 1 with with YMER™ N120

59.7 grams neutralized YMER™ N120, is added into the reactor to polymerize with the intermediate from step 1 under stirring, followed by the addition of 0.07 grams dibutyltin dilaurate. The reaction is run for 2 hours at less than 80 ° C and around 55 ° C. If necessary, the reaction is monitored by FTIR and GPC testing.

### Step 3: Reaction of the reaction product of step 2 with HEMA

Nitrogen gas is switched to dry air, and the pre-polymer is sparged for at least 30 min. Dry air is kept sparging. 5.73 grams of HEMA (containing 0.5%wt BHT (Butylated hydroxytoluene)) is added to the reactor, followed by addition of 0.07 grams of dibutyltin dilaurate. The reaction is run overnight at the required temperature. The temperature can range from 20 ° C - 50 ° C, but is preferably 35 ° C. The reaction is monitored by FTIR and GPC testing.

An exemplary weight ratio of IPDI: PDMS: YMER™: HEMA is 1.400: 1.000: 0.293: 0.235.

The Mn and PDI were determined according to ASTM D5296 as described above.

**Table 1: Procedure of Results of Steps 1, 2, and 3, Molecular Number (Mn) and Polydispersity Index (PDI)**

| Sample # | IPDI-PDMS Reaction | | | IPDI-PDMS-Ymer Reaction | | | HEMA End Capping | | | |
|---|---|---|---|---|---|---|---|---|---|---|
| | | | | | | | GPC (DMF, 80°) | | GPC (THF, 30°C) | |
| | Exotherm Max | Mn g/mol | PDI | Exotherm Max | Mn g/mol | PDI | Mn g/mol | PDI | Mn g/mol | PDI |
| 1 | 67 °C | 11467 | 1.20 | 58 °C | 19061 | 1.41 | 22768 | 1.35 | 16724 | 1.80 |
| 2 | 65 °C | 8890 | 1.28 | 84 °C | 29632 | 1.63 | 35455 | 1.72 | 30731 | 2.14 |
| 3 | 102 °C | N/A | N/A | 59 °C | N/A | N/A | 42926 | 1.51 | 16368 | 3.00 |
| 4 | 96 °C | N/A | N/A | 65 °C | N/A | N/A | 51369 | 2.04 | 24330 | 2.91 |
| 5 | 99 °C | N/A | N/A | 69 °C | N/A | N/A | 27070 | 1.48 | 11532 | 2.39 |
| 6 | 68 °C | N/A | N/A | 60 °C | N/A | N/A | 31104 | 1.68 | 12702 | 2.7 |
| 7 | 62 °C | N/A | N/A | 57 °C | N/A | N/A | 19767 | 1.45 | N/A | N/A |
| 8 | 70 °C | N/A | N/A | 57 °C | N/A | N/A | 25664 | 1.56 | N/A | N/A |
| 9 | 69 °C | N/A | N/A | 57 °C | N/A | N/A | 20357 | 1.48 | N/A | N/A |
| 10 | 65 °C | N/A | N/A | 56 °C | N/A | N/A | 18175 | 1.38 | N/A | N/A |

| | | | | | | | | | | |
|---|---|---|---|---|---|---|---|---|---|---|
| N/A (not tested) | | | | | | | | | | |

The block co-polymers of the present invention with PDMS to YMER™ weight ratios of 50:50 and 75:25 are prepared. Table 2 showed that prepolymers, block copolymers "50s" (samples 15, 16 and 17) and block copolymers "75s" (samples 12, 13 and 14) having molecular weight of 12,000 ∼ 13,000 g/mol could be produced repeatedly using a 500 ml round bottom flask as a reactor. The reaction temperature reading was from inside of the reactor. A sample of a block copolymer "50" (sample 18) has end groups capped with hydroxyethyl acrylamide (HEAA) is also made under the same conditions, giving a molecular weight of about 19,000 g/mol.

**Table 2: The effect of the Silicone(PDMS)/PEG(YMER™ N120) ratio.**

| Sample # | IPDI : PDMS : Ymer : HEMA (mol) | **GPC Data (DMF, 80 °C)** | | **GPC Data (THF, 30 °C)** | | PDMS: Ymer (%by weight) |
|---|---|---|---|---|---|---|
| | | **Mn(g/mol)** | **PDI** | Mn (g/mol) | PDI | |
| 11 | 2.000 : 1.250 : 0.366 : 0.844 | **15691** | **1.36** | 6100 | 1.84 | 75 : 25 |
| 12 | | **13457** | **1.24** | 4964 | 1.63 | |
| 13 | | **13177** | **1.25** | 5015 | 1.65 | |
| 14 | | **13084** | **1.22** | 4677 | 1.59 | |
| 15 | 2.000 : 0.858 : 0.752 : 0.860 | **12399** | **1.19** | 3941 | 1.53 | 50 : 50 |
| 16 | | **12837** | **1.25** | 4203 | 1.54 | |
| 17 | | **12286** | **1.20** | 3708 | 1.51 | |
| 18 | 2.000:1.000:0.875: 0.275* | **19299** | **1.53** | N/A | N/A | 50 : 50 |

| | | | | | | |
|---|---|---|---|---|---|---|
| * HEMA is substituted with HEAA. (1) Reaction Temperature Setting (°C) : 55 - 55 - 40. (2) Batch Size : 150 g | | | | | | |

### Example 2: The effect of reaction temperature on block copolymer molecular weight.

The reaction temperature may affect molecular weight of the resultant macromer. When synthesis of block copolymer "75s" is selected to scale up to 1 kg batch size, a 1 gallon glass vessel is used as a reactor. Considering reaction temperature measured outside of the reactor, a reaction temperature profile of Step1 (70 ° C) - Step 2 (65 ° C) - Step3 (50 ° C) is set for sample 19 (see Table 3). The molecular weight of the product is 23,000 g/mol. One possible reason for the higher molecular weight is because of the higher reaction temperatures. To target molecular weight of 13,000 g/mol, the thermocouple is installed inside the reactor for sample 20. The actual reaction temperature profile for this lot is as follows: Step1 (62 ° C) - Step 2 (60 ° C) - Step3 (40 ° C). In this circumstance, a molecular weight of 17,000 g/mol is obtained for sample 20.

**Table 3. 1 KG Scale Production of block copolymer "75s"**

| Sample # | Reaction Temperature Profile, °C | IPDI-PDMS Reaction | | | IPDI-PDMS-YMER™ Reaction | | | **HEMA End Capping** | |
|---|---|---|---|---|---|---|---|---|---|
| | | Exothermic Max | Mn(g/mol) | PDI | Exothermic Max | Mn (g/mol) | PDI | **Mn (g/mol)** | **PDI** |
| 19 | 70-65-50 (outside reactor) | 78 °C | 10164 | 1.12 | 67 °C | 23298 | 1.54 | **22543** | **1.58** |
| 20 | 62-60-40 (inside reactor) | 71 °C | N/A | N/A | 62 °C | N/A | N/A | **17364** | **1.44** |

| | | | | | | | | | |
|---|---|---|---|---|---|---|---|---|---|
| (1) IPDI : PDMS : YMER™ : HEMA = 2.000 : 1.250 : 0.366 : 0.844 (by mole) (2) PDMS : YMER™ = 75 : 25 (by weight) (3) GPC run in DMF at 80 ° C | | | | | | | | | |

### Example 3: Characteristics of Lenses Made With Block Copolymers

In another embodiment, the block copolymers made above are combined with a hydrophilic monomer (HEMA, DMA, NVP) and Silicone monomer (TRIS, SIGMA), cured and formed into contact lenses.

## Claims

1. A block copolymer having the structure of formula (I) or (II) or (III) or (IV):
E₁-[X-Sil]_{z}-X-[[Y-[X-Sil]ₙ]ₘ-X-E₂ (I)
E₁-[[Y-[X-Sil]ₙ]ₘ-X-Y-E₂ (II)
E₁-[X-Y]_{z}-X-[Sil-[X-Y]ₙ]ₘ-X-E₂ (III)
E₁-Sil-[X-Y]_{z}-X-[Sil-[X-Y]ₙ]ₘ-X-Sil-E₂ (IV)
wherein
E1 and E2 are endgroups containing at least one reactive double bond,
Y is a diol derived unit comprising at least one pendant oligomeric or polymeric group,
X is a unit derived from a diisocyanate ,
Sil is a siloxane oligomer or polymer unit,
And wherein
m is an integer ranging from 1 to 50,
n is an integer ranging from 1 to 50, and
z is an integer ranging from 1 to 50.

2. The block copolymer according to claim 1, wherein the diisocyanate is an aliphatic diisocyanate.

3. The block copolymer according to claim 1 or 2, wherein the pendant oligomeric or polymeric groups are hydrophilic groups.

4. The block copolymer according to claim 3, wherein the pendant oligomeric or polymeric groups are PEO groups.

5. The block copolymer according to any one of claims 1-4, wherein the diol from which the diol-derived unit comprising a pendant oligomeric or polymeric groups has been derived has a Mn ranging from 300-5000 g/mol, as determined by Gel Permeation Chromatography using N,N-dimethyl formamide (DMF) as the solvent at 80°C

6. The block copolymer according to any one of claims 1-5, wherein the siloxane unit or consist of a unit derived from polydimethylsiloxane diol.

7. The block copolymer according to any one of claims 1-6, wherein
Y is a diol having a pendent polyethyleneglycol olimer or polymer group,
X is a unitderived from isophorone diisocyanate (IPDI),
Sil is a unit derived from a polydimethylsiloxane (PDMS) diol, and
wherein
m is an integer ranging from 1 to 50,
n is an integer ranging from 1 to 50, and
z is an integer ranging from 1 to 50.

8. A block copolymer according to any one of claims 1-7 wherein E1 or E2 are endgroups obtained after reacting hydroxyethylmethacrylate (HEMA).

9. The block copolymer according to any one of claims 1-8, wherein the number average molecular weight of the total block copolymer is ranging from 8,000 to 55,000 g/mol as determined by Gel Permeation Chromatography using N,N-dimethyl formamide (DMF) as the solvent at 80°C.

10. A method for the production of a block copolymer according to Formula (I) or (II) according to any one of claims 1-9, comprising:
a. reacting a diisocyanate with a polysiloxane diol unit under dry air or nitrogen gas at elevated temperature in the presence of a catalyst to form an intermediate;
b. reactingsaid intermediate with one or more diols comprising at least one pendant oligomeric or polymeric group , under nitrogen with stirring in the presence of a catalyst to form a polymer;
c. reacting said polymer with a compound having at least one reactive double bond in the presence of a catalyst under dry air.

11. A method for the production of a block copolymer according to Formula (III) or (IV) according to any one of claims 1-9, comprising:
a. reacting a diisocyanate with one or more diols comprising at least one pendant oligomeric or polymeric group under nitrogen gas at elevated temperature in the presence of a catalyst to form an intermediate;
b. reactingsaid intermediate with one or more polysiloxane diols, under under dry air or nitrogen with stirring in the presence of a catalyst to form a polymer;
c. reacting said polymer with a compound having at least one reactive double bond in the presence of a catalyst under dry air.

12. The method of claim 10 or 11, wherein the amount of siloxane unit may range from45-85% by weight of the total weight of polysiloxane diol and the diol comprising at least one pendant oligomeric or polymeric group in the composition and the amount of polyalkylene oxide may range from 15-55% by weight of the total weight of polysiloxane diol and the diol comprising at least one pendant oligomeric or polymeric group in the composition.

13. A contact lens formulation comprising a block copolymer according to any one of claims 1-9.

14. The contact lens formulation according to claim 13, further comprising a silicone monomer and a hydrophilic monomer.

## Patentansprüche

1. Blockcopolymer mit der Struktur der Formel (I) oder (II) oder (III) oder (IV):
E₁-[X-Sil]_{z}-X-[[Y-[X-Sil]ₙ]ₘ-X-E₂ (I)
E₁-[[Y-[X-Sil]ₙ]ₘ-X-Y-E₂ (II)
E₁-[X-Y]_{z}-X-[Sil-[X-Y]ₙ]ₘ-X-E₂ (III)
E₁-Sil-[X-Y]_{z}-X-[Sil-[X-Y]ₙ]ₘ-X-Sil-E₂ (IV)
wobei
E1 und E2 für Endgruppen mit mindestens einer reaktiven Doppelbindung stehen,
Y für eine von einem Diol abgeleitete Einheit mit mindestens einer seitenständigen oligomeren oder polymeren Gruppe steht,
X für eine von einem Diisocyanat abgeleitete Einheit steht,
Sil für eine Siloxanoligomer- oder -polymereinheit steht,
und wobei
m für eine ganze Zahl im Bereich von 1 bis 50 steht,
n für eine ganze Zahl im Bereich von 1 bis 50 steht und
z für eine ganze Zahl im Bereich von 1 bis 50 steht.

2. Blockcopolymer nach Anspruch 1, wobei es sich bei dem Diisocyanat um ein aliphatisches Diisocyanat handelt.

3. Blockcopolymer nach Anspruch 1 oder 2, wobei es sich bei den seitenständigen oligomeren oder polymeren Gruppen um hydrophile Gruppen handelt.

4. Blockcopolymer nach Anspruch 3, wobei es sich bei den seitenständigen oligomeren oder polymeren Gruppen um PEO-Gruppen handelt.

5. Blockcopolymer nach einem der Ansprüche 1-4, wobei das Diol, von dem die von einem Diol abgeleitete Einheit mit einer seitenständigen oligomeren oder polymeren Gruppe abgeleitet worden ist, ein Mn im Bereich von 300-5000 g/mol gemäß Bestimmung durch Gelpermeationschromatographie unter Verwendung von N,N-Dimethylformamid (DMF) als Lösungsmittel bei 80°C aufweist.

6. Blockcopolymer nach einem der Ansprüche 1-5, wobei die Siloxaneinheit aus einer Einheit, die sich von Polydimethylsiloxandiol ableitet, besteht.

7. Blockcopolymer nach einem der Ansprüche 1-6, wobei
Y für ein Diol mit einer seitenständigen Polyethylenglykololigomer- oder -polymergruppe steht,
X für eine Einheit, die sich von Isophorondiisocyanat (IPDI) ableitet, steht,
Sil für eine Einheit, die sich von einem Polydimethylsiloxandiol (PDMS-Diol) ableitet, steht, und
wobei
m für eine ganze Zahl im Bereich von 1 bis 50 steht,
n für eine ganze Zahl im Bereich von 1 bis 50 steht und
z für eine ganze Zahl im Bereich von 1 bis 50 steht.

8. Blockcopolymer nach einem der Ansprüche 1-7, wobei E1 oder E2 für nach Umsetzung von Hydroxyethylmethacrylat (HEMA) erhaltene Endgruppen stehen.

9. Blockcopolymer nach einem der Ansprüche 1-8, wobei das zahlenmittlere Molekulargewicht des gesamten Blockcopolymers im Bereich von 8000 bis 55.000 g/mol gemäß Bestimmung durch Gelpermeationschromatographie unter Verwendung von N,N-Dimethylformamid (DMF) als Lösungsmittel bei 80°C liegt.

10. Verfahren zur Herstellung eines Blockcopolymers gemäß Formel (I) oder (II) nach einem der Ansprüche 1-9, das Folgendes umfasst:
a. Umsetzen eines Diisocyanats mit einer Polysiloxandiol-Einheit unter trockener Luft oder Stickstoffgas bei erhöhter Temperatur in Gegenwart eines Katalysators zur Bildung eines Zwischenprodukts;
b. Umsetzen des Zwischenprodukts mit einem oder mehreren Diolen mit mindestens einer seitenständigen oligomeren oder polymeren Gruppe unter Stickstoff unter Rühren in Gegenwart eines Katalysators zur Bildung eines Polymers;
c. Umsetzen des Polymers mit einer Verbindung mit mindestens einer reaktiven Doppelbindung in Gegenwart eines Katalysators unter trockener Luft.

11. Verfahren zur Herstellung eines Blockcopolymers gemäß Formel (III) oder (IV) nach einem der Ansprüche 1-9, das Folgendes umfasst:
a. Umsetzen eines Diisocyanats mit einem oder mehreren Diolen mit mindestens einer seitenständigen oligomeren oder polymeren Gruppe unter Stickstoffgas bei erhöhter Temperatur in Gegenwart eines Katalysators zur Bildung eines Zwischenprodukts;
b. Umsetzen des Zwischenprodukts mit einem oder mehreren Polysiloxandiolen unter trockener Luft oder Stickstoff unter Rühren in Gegenwart eines Katalysators zur Bildung eines Polymers;
c. Umsetzen des Polymers mit einer Verbindung mit mindestens einer reaktiven Doppelbindung in Gegenwart eines Katalysators unter trockener Luft.

12. Verfahren nach Anspruch 10 oder 11, bei dem die Menge an Siloxaneinheit im Bereich von 45-85 Gew.-% des Gesamtgewichts des Polysiloxandiols und des Diols mit mindestens einer seitenständigen oligomeren oder polymeren Gruppe in der Zusammensetzung liegen kann und die Menge an Polyalkylenoxid im Bereich von 15-55 Gew.-% des Gesamtgewichts des Polysiloxandiols und des Diols mit mindestens einer seitenständigen oligomeren oder polymeren Gruppe in der Zusammensetzung liegen kann.

13. Kontaktlinsenformulierung, umfassend ein Blockcopolymer nach einem der Ansprüche 1-9.

14. Kontaktlinsenformulierung nach Anspruch 13, ferner umfassend ein Silikonmonomer und ein hydrophiles Monomer.

## Revendications

1. Copolymère séquencé ayant la structure de formule (I) ou (II) ou (III) ou (IV) :
E₁-[X-Sil]_{z}-X-[[Y-[X-Sil]ₙ]ₘ-X-E₂ (I)
E₁-[[Y-[X-Sil]ₙ]ₘ-X-E₂ (II)
E₁-[X-Y]_{z}-X-[Sil-[X-Y]ₙ]ₘ-X-E₂ (III)
E₁--Sil-[X-Y]_{z}-X-[Sil-[X-Y]ₙ]ₘ-X-Sil-E₂ (IV)
dans lequel
E₁ et E₂ sont des groupes terminaux contenant au moins une double liaison réactive,
Y est un motif issu de diol comprenant au moins un groupe oligomère ou polymère pendant,
X est un motif issu d'un diisocyanate,
Sil est un motif oligomère ou polymère siloxane,
et dans lequel
m est un nombre entier allant de 1 à 50,
n est un nombre entier allant de 1 à 50 et
z est un nombre entier allant de 1 à 50.

2. Copolymère séquencé selon la revendication 1, dans lequel le diisocyanate est un diisocyanate aliphatique.

3. Copolymère séquencé selon la revendication 1 ou 2, dans lequel les groupes oligomères ou polymères pendants sont des groupes hydrophiles.

4. Copolymère séquencé selon la revendication 3, dans lequel les groupes oligomères ou polymères pendants sont des groupes PEO.

5. Copolymère séquencé selon l'une quelconque des revendications 1 à 4, dans lequel le diol dont est issu le motif issu de diol comprenant un groupe oligomère ou polymère pendant a une Mn, telle que déterminée par chromatographie par perméation de gel à l'aide de *N,N-*diméthylformamide (DMF) en tant que solvant à 80 °C, allant de 300 à 5000 g/mol.

6. Copolymère séquencé selon l'une quelconque des revendications 1 à 5, dans lequel le motif siloxane est constitué d'un motif issu de diol de polydiméthylsiloxane.

7. Copolymère séquencé selon l'une quelconque des revendications 1 à 6, dans lequel
Y est un diol ayant un groupe oligomère ou polymère polyéthylèneglycol pendant,
X est un motif issu de diisocyanate d'isophorone (IPDI),
Sil est un motif issu d'un diol de polydiméthylsiloxane (PDMS) et
dans lequel
m est un nombre entier allant de 1 à 50,
n est un nombre entier allant de 1 à 50 et
z est un nombre entier allant de 1 à 50.

8. Copolymère séquencé selon l'une quelconque des revendications 1 à 7, dans lequel E₁ ou E₂ sont des groupes terminaux obtenus après réaction de méthacrylate d'hydroxyéthyle (HEMA).

9. Copolymère séquencé selon l'une quelconque des revendications 1 à 8, la masse moléculaire moyenne en nombre du copolymère séquencé total, telle que déterminée par chromatographie par perméation de gel à l'aide de *N,N*-diméthylformamide (DMF) en tant que solvant à 80 °C, allant de 8 000 à 55 000 g/mol.

10. Procédé pour la production d'un copolymère séquencé répondant à la formule (I) ou (II) selon l'une quelconque des revendications 1 à 9, comprenant :
a. la réaction d'un diisocyanate avec un motif diol de polysiloxane sous de l'air sec ou de l'azote gazeux à une température élevée en présence d'un catalyseur pour former un intermédiaire ;
b. la réaction dudit intermédiaire avec un ou plusieurs diols comprenant au moins un groupe oligomère ou polymère pendant, sous de l'azote avec agitation en présence d'un catalyseur pour former un polymère ;
c. la réaction dudit polymère avec un composé ayant au moins une double liaison réactive en présence d'un catalyseur sous de l'air sec.

11. Procédé pour la production d'un copolymère séquencé répondant à la formule (III) ou (IV) selon l'une quelconque des revendications 1 à 9, comprenant :
a. la réaction d'un diisocyanate avec un ou plusieurs diols comprenant au moins un groupe oligomère ou polymère pendant sous de l'azote gazeux à une température élevée en présence d'un catalyseur pour former un intermédiaire ;
b. la réaction dudit intermédiaire avec un ou plusieurs diols de polysiloxane, sous de l'air sec ou de l'azote avec agitation en présence d'un catalyseur pour former un polymère ;
c. la réaction dudit polymère avec un composé ayant au moins une double liaison réactive en présence d'un catalyseur sous de l'air sec.

12. Procédé selon la revendication 10 ou 11, dans lequel la quantité de motif siloxane peut aller de 45 à 85 % en poids par rapport au poids total de diol de polysiloxane et du diol comprenant au moins un groupe oligomère ou polymère pendant dans la composition et la quantité de poly(oxyde d'alkylène) peut aller de 15 à 55 % en poids par rapport au poids total de diol de polysiloxane et du diol comprenant au moins un groupe oligomère ou polymère pendant dans la composition.

13. Formulation de lentille de contact comprenant un copolymère séquencé selon l'une quelconque des revendications 1 à 9.

14. Formulation de lentille de contact selon la revendication 13, comprenant en outre un monomère silicone et un monomère hydrophile.
